(19) Europäisches Patentamt / European Patent Office / Office européen des brevets

(11) **EP 2 367 857 B1**

(12) **EUROPEAN PATENT SPECIFICATION**

(45) Date of publication and mention
of the grant of the patent:
**04.05.2016 Bulletin 2016/18**

(21) Application number: **09765029.5**

(22) Date of filing: **01.12.2009**

(51) Int Cl.:
**C08F 210/16** *(2006.01)*          **C08F 4/02** *(2006.01)*
**C08F 4/69** *(2006.01)*          **B65D 1/12** *(2006.01)*

(86) International application number:
**PCT/EP2009/008545**

(87) International publication number:
**WO 2010/063444 (10.06.2010 Gazette 2010/23)**

(54) **POLYETHYLENE FOR THE PRODUCTION OF OPEN HEAD DRUMS**

POLYETHYLEN ZUR HERSTELLUNG VON DECKELFÄSSERN

POLYÉTHYLÈNE POUR LA FABRICATION DE FÛTS AVEC COUVERCLE AMOVIBLE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **04.12.2008 EP 08021044**

(43) Date of publication of application:
**28.09.2011 Bulletin 2011/39**

(73) Proprietor: **Saudi Basic Industries Corporation
Riyadh 11422 (SA)**

(72) Inventors:
• **NOOIJEN, Godefridus Arnoldus Henricus**
**6160 GA Geleen (NL)**
• **MARTENS, Johannes Peter Antonius**
**6160 GA Geleen (NL)**
• **REIJNTJENS, Ron**
**6160 GA Geleen (NL)**
• **GROENEBOOM, Robert Harm**
**6160 GA GELEEN (NL)**
• **VAN KESSEL, Matthijs**
**6160 GA GELEEN (NL)**

(74) Representative: **Sabic Intellectual Property Group
Sabic Intellectual Property Department
P.O. Box 3008
6160 GA Geleen (NL)**

(56) References cited:
**WO-A-2005/054315          JP-A- 2006 182 917**

• **KURELEC L ET AL: "Strain hardening modulus
as a measure of environmental stress crack
resistance of high density polyethylene"
POLYMER 20050728 ELSEVIER LTD GB, vol. 46,
no. 17, 28 July 2005 (2005-07-28) , pages
6369-6379, XP002527237 cited in the application**

**Description**

The present invention relates to polyethylene suitable for producing open head drums.

The production processes of the polyethylenes LDPE, HDPE and LLDPE are summarised in "Handbook of Polyethylene" by Andrew Peacock (2000; Dekker; ISBN 0824795466) at pages 43-66. The applied catalysts can be divided in three different subclasses including Ziegler Natta catalysts, Phillips catalysts and single site catalysts.

EP-B-1204523 and WO2005054315A1 disclose the production of containers by blow moulding of a polymer material for example high density polyethylene (HDPE).In the production of containers using polymer materials, a variety of moulding techniques may be used, in particular blow moulding, injection moulding and rotational moulding. For medium to large sized containers between for example 1 and 1000 litres volume blow moulding is commonly used and for very large containers, for example for use as oil or water tanks, rotational moulding can also be used. Generally in the blow moulding of containers a heated parison or extrudate is expanded to contact the interior surface of a mould by the action of pressurized gas within the parison and/or by application of a partial vacuum within the mould, for example by use of a mould having within its surface gas outlet vents through which a partial vacuum may be applied. For blow moulding to be successful, the heated polymer must be able to stretch smoothly to produce a satisfactorily uniform skin in contact with the mould surface. In the production of containers larger than 5 litres and intended for the use of dangerous goods by blow moulding generally a high molecular weight HDPE with a melt flow rate (MFR$_{21}$) in the range up to 12 g/10 min. may be applied. The choice of such materials essentially represents a compromise between the properties of the polymer, in particular the processability properties required for the blow moulding to be performed efficiently and successfully and the mechanical and chemical properties required for the end uses of the blow moulded containers such as for example impact resistance, stiffness and environmental stress crack resistance (ESCR).

HDPE is used to manufacture different types of industrial transit packaging such as large industrial open head drums, tight head drums, jerry cans, fuel tanks and intermediate bulk containers (IBC). The different types of storage and transit containers require different types of HDPE as the basic polymer because each type of industrial storage container requires an unique balance of impact resistance and ESCR properties and good processability properties.

In the development and the selection of the polymer there is typically a trade off between characteristics such as resistance to slow crack growth (measured for example by ESCR), stiffness (measured for example by density) impact resistance ( measured for example by Izod), chemical resistance and processability or more specifically ease of extrusion (measured for example by melt index). Typically the higher the molecular weight of polyethylene the higher the impact resistance and ESCR. However, increasing the molecular weight will decrease processability and make extrusion more difficult.

The end user and the governmental regulations require that the container meet certain minimum requirements, such as for example for impact resistance, top load, ESCR, chemical resistance, food approval and UN approval. Furthermore the producer of the containers expects ease of processability and material consistency. Depending on the end use, there may be even more specific requirements of the material. For instance, in the case of large drums manufactured by blow moulding, high melt strength is generally desired, as the parison produced in the blow moulding process typically must maintain its integrity for longer periods of time as the object made gets larger. Each blow moulding application requires specific properties of the HDPE grades. For example, for food packaging organoleptic properties are important whereas environmental stress crack resistance and stiffness are important for detergent and cleaner applications. Industrial containers require sufficient chemical resistance and impact strength, especially when the containers are filled with products classified as dangerous goods under the UN recommendations. These recommendations recognise several types of packaging that can be used for the transport of dangerous goods:

•    Packages up to 400 kg or 450 l such as for example jerry-cans and drums such as open head drums,
•    Composite packages, inner and outer package fitting together such as for example bag-in-box,
•    IBC's up to 3m$^3$ for example flexible IBC, full plastic, composite steel outer cage with plastic inner receptacle and
•    Large packaging from 400 kg or 450 l up to 3m$^3$ such as for example a pallet-box.

Open top drums or open head drums are single-piece, blow-moulded containers made from HDPE, generally available in a capacity range between 60 and 200 litres and a body weight between 2 and 8 kg. The drums have a single wide mouthed opening, and are closed with a large, injection moulded lid incorporating a rubber gasket seal, which is secured by lever action (C-section galvanized steel closing ring). Open top drums are used to transport semi solids, powders and fluids. Examples of open head drums are disclosed for example in US6170691.

The focus for polymer development within the open top drum market is to obtain improved processability, higher stiffness for light weighting and improved balance in impact and ESCR properties.

It is the object of the present invention to provide high density polyethylene grades to be used in the production of open head drums having an excellent balanced combination of processability, stiffness/ impact properties, ESCR properties and surface/welding quality while maintaining the other desired properties.

The ethylene polymer according to the present invention is a pelletized HDPE having:

- a density $\geq$ 953 kg/m$^3$ and $\leq$ 957 kg/m$^3$ ( according to ISO1183)
- a high-load melt index (HLMI) $\geq$ 3 g/10 min and $\leq$ 12 g/10 min ( according to ISO 1133; 190°C,21.6 kg)
- an Izod impact strength(-30°C) $\geq$ 25 KJ/m$^2$ and $\leq$ 70 KJ/m$^2$ (according to ISO 180/A) and
- $M_w$ / $M_n$ $\geq$ 8 and $\leq$ 16 (according to size exclusion chromatography (SEC) measurement).

The strain hardening modulus of the pelletized HDPE $\geq$ 10 and $\leq$ 25 MPa (according to the method as described in Elsevier, Polymer 46(2005) 6369-6379).

Said testing methods are described in the Examples.

The pelletized HDPE according to the invention results in open head drums having an excellent combination of stiffness, ESCR, impact, processing properties and surface quality.

Preferably the density $\geq$ 954 kg/m$^3$.

Preferably HLMI $\geq$4 and $\leq$10 g/10 min.

Preferably the Izod impact strength (-30°C) is $\geq$ 30 KJ/m$^2$. Preferably the strain hardening modulus $\geq$ 14 MPa.

Preferably the die swell at 1600 s$^{-1}$ $\geq$ 2 and $\leq$4 (according to ISO 11443).

Preferably $M_w$ / $M_n$ $\geq$ 10 and $\leq$ 14.

Pelletized HDPE according to the invention results in open head drums having an excellent combination of processing properties, stiffness/rigidity, ESCR, impact, surface and welding quality.

A further advantage is the combination of properties and the reduction of system costs such as for example down gauging and cycle time reduction in the production of the open head drums.

The pelletized polymers are obtained after the extrusion step whereas the reactor powder is the product obtained as powder from the reactor. The pelletized HDPE is advantageous over HDPE reactor powder. The current commercial HDPE materials, which do fulfil market requirements regarding impact and ESCR and are used in this open head drum market are reactor powders with a HLMI of about 2.0 g/10 min. and are produced in single reactor processes with silica supported chromium containing catalysts. However, during processing of these reactor powders into drums, the melt viscosity increases significantly (HLMI drops to 1.7-1.8 g/10 min.) due to the well known melt index drop during extrusion, so processing of these powders becomes more difficult. In contrast, if a pelletized HDPE material with a HLMI $\geq$3 g/10 min. (according to the present invention) is processed into a drum, the melt viscosity decreases (i.e. HLMI increases) and consequently processing into open head drums goes much better. One can of course improve the processability of reactor powder grades by increasing the HLMI of the starting material, but then mechanical properties like impact and ESCR will decrease. Another practical disadvantage of the reactor powder over the pelletized product is the reduced extruder output; the use of the pelletized product makes it possible to apply 100% virgin material.

Pelletized HDPE is much more beneficial in safety, health and environmental aspects compared to the HDPE reactor powders during the blow moulding process.

Furthermore pelletized HDPE has excellent homogeneous distribution of additives as for example stabilisers as compared to the HDPE reactor powder.

Pelletized HDPE produced with so-called Ziegler-Natta catalysts in two or more polymerization reactors in series are also used in this market. However, a process with two or more polymerization reactors in series is much more complicated and requires higher investment costs. The single reactor process has a clear cost advantage compared to processes with two or more polymerization reactors in series.

Preferably, the polymerization process for the preparation of the ethylene copolymers according to the invention takes place by polymerizing ethylene in the presence of a silica supported chromium and fluor containing catalyst and in the presence of an alkyl group containing promoter and wherein the silica-supported chromium catalyst does not comprise boron.

According to a preferred embodiment the polymerization takes place by polymerizing ethylene and at least one olefin comonomer having between three and ten carbon atoms per molecule.

The preferred comonomer is 1-hexene.

According to a preferred embodiment the polymerization process takes place in the presence of a chromium-containing catalyst.

Generally, a chromium-containing catalyst contains a support. Preferably the support is a silica support.

Suitable silica supports may be produced by different methods.

The most commonly used silica supports are powders with irregular shaped granular particles, which can be used as support for the chromium containing catalyst in the process according to the present invention.

Other supports are produced by spray-drying techniques which result in spherically shaped particles. These so-called spray dried silica supports may also be used as silica support for the chromium-containing catalyst in the process according to the present invention.

Other spherical shaped silica particles are directly formed in the first step of the silica production process. These so-called micro-spherical silica supports may also be used as silica support for the chromium-containing catalyst as applied in the process according to the present invention.

The silica may have a surface area (SA) larger than 200 $m^2$/g, and a pore volume (PV) larger than 0.8 $cm^3$/g.

The support may be modified so as to include cogels such as for example silica-titania or silica-alumina and by the replacement of silica by alumina or amorphous aluminium phosphates. Furthermore, the support may comprise a tergel which is produced by mixing a chromium source with the silica and titania compound.

The chromium-containing catalyst may also be doped with chemical compounds containing for example aluminium, titanium, phosphorus, or fluor for example by impregnation of the porous chromium-containing supports with solutions of such compounds. These chemical compounds containing for example aluminium, titanium, phosphorus, or fluor may also be supplied to the silica support together with the chromium containing compound.

Preferably the silica-supported chromium-containing catalyst is an unmodified silica-supported chromium catalyst having a pore volume smaller than 2.0 $cm^3$/g and the specific surface area is at least 300 $m^2$/gram.

The silica-supported chromium catalyst is a silica-supported chromium containing catalyst that also contains fluor.

The properties of the catalyst, pore volume and specific surface area are determined before the catalyst is activated at an elevated temperature.

Generally the amount of chromium in the catalyst is at least 0.5 % by weight.

Preferably the amount of chromium in the catalyst is at least 1.0 % by weight.

Generally the amount of fluor in the catalyst is at least 0.5 % by weight.

Preferably the amount of fluor in the catalyst is at least 1.0 % by weight.

According to a preferred embodiment of the invention the average particle size ($d_{50}$) of the catalyst is between 25 and 150 micrometers.

Generally, the catalyst is activated before being applied in the polymerization reaction. The activation may take place under different conditions. The activation generally takes place at an elevated temperature, for example, at a temperature above 450°C. The activation may take place in different atmospheres, for example in dry air.

According to a preferred embodiment the activation takes place at least partially under an inert atmosphere preferably consisting of nitrogen. At the same time the temperature is raised slowly. It has been found to be advantageous to change from the nitrogen atmosphere to an atmosphere of dry air at a temperature of at most 700°C. The activation time after reaching the maximum temperature may last for several minutes to several hours. Preferably this activation time is at least 1 hour but it may be advantageous to activate much longer.

Preferably, the alkyl containing promoter is an alkyl boron compound.

More preferably, the alkyl boron compound is triethyl boron.

Generally the boron concentration in the polymerization reactor is less than 0.25 ppm of boron based on the diluent.

Preferably, the concentration is less than 0.15 ppm of boron and more preferably the concentration is less than 0.10 ppm boron and even more preferably the concentration is less than 0.05 ppm boron.

According to a preferred embodiment of the invention the concentration is less than 0.05 ppm boron.

Preferably the polymerization of ethylene takes place in a diluent at a temperature of between 90°C and 110°C.

Suitable diluents include, for example, isobutane and propane. The polymerisation takes place in a single reactor.

The polymerization may be performed via a gas-phase process or via a slurry process.

According to a preferred embodiment of the invention the reactor is a slurry loop reactor.

According to a preferred embodiment of the invention the ethylene copolymer is obtained by polymerizing ethylene and hexene in a slurry loop reactor in the presence of a chromium and fluor containing catalyst on a silica support and an alkyl boron compound, preferably triethyl boron.

According to a further preferred embodiment of the invention the ethylene copolymer is obtained by polymerising ethylene and 1-hexene in a slurry loop reactor in the presence of a silica-supported chromium and fluor containing catalyst and triethyl boron wherein the silica-supported chromium-containing catalyst is a silica-supported chromium catalyst having a pore volume smaller than 2.0 $cm^3$/g and a specific surface area of at least 300 $m^2$/gram ,wherein the amount of chromium in the catalyst is at least 0.5 % by weight and the amount of fluor in the catalyst is at least 0.5 % by weight and wherein the boron concentration in the polymerization reactor is less than 0.25 ppm of boron based on the diluent.

The ethylene copolymers according to the invention may be combined with additives such as for example lubricants, fillers, stabilizers, antioxidants, compatibilizers and pigments. The additives used to stabilize the copolymers may be, for example, additive packages including hindered phenols, phosphites, antistatics and stearates.

An anti static agent can be used to suppress fouling of the reactor wall. Suitable anti static agents are disclosed in for example US4182810 and EP107127. Other suitable anti static agents include for example STATSAFE™ from Innospec Active Chemicals.

The polymers according to the inventions are also suitable to be applied in the production of jerry cans.

JP-A-2006182917 discloses an organoboron treated fluorinated chromium polymerization catalyst produced by bringing an organoboron compound into contact with a fluorinated chromium catalyst. This organoboron treated fluorinated chromium polymerization catalyst is applied as catalyst during the polymerisation of ethylene. The catalyst applied in the present invention is different because the silica-supported chromium catalyst does not comprise boron. In the process according to the present invention a boron compound is added to the polymerisation reactor which also contains the silica-supported chromium catalyst whereas JP-A-2006182917 teaches to use a boron comprising catalyst. Furthermore JP-A-2006182917 does not disclose polyethylene having the specific characteristics required in the production of the specific technical field of open head drums. The polymers as disclosed in Table 1 of JP-A-2006182917 are unsuitable to be applied in the production of open head drums because the density is lower than 946 kg/m$^3$, Mw / M$_n$ is higher than 17.8 and the impact of the obtained product is unsuitable. JP-A-2006182917 does not disclose and does not give any indication for a pelletized ethylene polymer having as specific features a density $\geq$ 953 kg/m$^3$ and $\leq$ 957 kg/m$^3$, a high-load melt index (HLMI) $\geq$ 3 g/10 min and $\leq$ 12 g/10 min, an Izod impact strength(-30°C) $\geq$ 25 KJ/m$^2$ and $\leq$ 70 KJ/m$^2$, a strain hardening modulus $\geq$ 10 and $\leq$ 25 MPa and M$_w$ / M$_n$ $\geq$ 8 and $\leq$ 16 to be suitable in the production of open head drums.

The invention will be elucidated by means of the following nonlimiting examples.

Examples I-II and Comparative Examples A-B

The characteristics of polyethylene obtained in the examples were determined as follows:

- The density of polyethylene was measured according to ISO 1183 (with additional annealing step) (30 minutes boiling and cooling in water).
- The high-load melt index (HLMI) of polyethylene was measured according to ISO 1133 on pellets at 190°C with a test weight of 21.6 kg.
- The strain hardening modulus is a measure of environmental stress crack resistance of high density polyethylene. The strain hardening modulus of polyethylene was measured by the method as described by Kurelec et al.in Elsevier, Polymer 46 (2005) p. 6369-6379. ESCR measurements by testing specimen in a non-ionic surfactant environment at elevated temperatures until failure is a test method which is accepted by the blow moulding market for decades. Main disadvantages of this method are the long time before failures occurs and the relative high deviation in reproducibility. A more elegant test method which overcomes these disadvantages is the ESCR method according to a standard tensile test in which the strain hardening modulus is calculated from the true-stress true-strain (TS-TS) curve. The strain hardening modulus is an intrinsic material property in which no surfactant is needed for accelerated failure times. It has been proven by L.Kurelec et al in said article that the strain hardening modulus perfectly correlates with the ESCR data as obtained by the surfactant environment method. In Table 2 (p. 6375) the ESCR and strain hardening modulus (< Gp>) data of some Cr HDPE grades and bimodal HDPE grades (both with C$_4$ and C$_6$ as co-monomers) are collected and plotted against each other (Figure 10, p. 6377). It shows a very well correlation (Rsquare=0.90) in a strain hardening modulus range between 10 and 35 MPa. The test method as described can easily be carried out by any person skilled in the art. The sample preparation and the measurements are described in Chapters 2.3.1.and 2.3.2.of this article. The observed correlation (Figure 10) is based on tensile measurements at T=80°C. The strain hardening modulus < Gp> can be calculated as given in Chapter 2.3.3. (data treatment) of the article.
- The impact properties were measured at -30 °C according to Izod (ISO 180 type A) on bars, cutted out of pressed plates.
- The polydispersity of polyethylene is defined as M$_w$/M$_n$. M$_w$ and M$_n$ were determined by size exclusion chromatography (SEC) measurement. See pages 242-244 of "Handbook of Polyethylene, structure, properties and applications "(by Andrew Peacock, Dekker, New York, 2000).
- The die swell of polyethylene was measured according to ISO 11443. The measurements were performed at a rate of 1600 s$^{-1}$. Each measurement was repeated six times. For die swell calculations the following formulae was used:

Swell ratio is defined as follows:

$$SR = \frac{\left( \dfrac{\sum D_{extrudate}}{n} \right)}{D_{capillary}}$$

wherein

SR = swell ratio
$D_{extrudate}$ = diameter of extrudate right below the die streng [mm]
$D_{capillary}$ = diameter of capillary [1.00 mm]
n = number of experiments

The die swell is further calculated using the formula: Die swell = $(SR)^2 - 1$

Example I

Ethylene and 1-hexene were copolymerized in a continuously operated 5 L liquid-filled CSTR reactor in isobutane at 4.6 MPa (46 bar) in the presence of a silica supported chromium catalyst having a pore volume of 1.50 $cm^3$/g, a $D_{50}$ of 45 micrometers and a surface area of 415 $m^2$/g. The catalyst contained 1.1 wt% of chromium and 1.0 wt% fluor.

This catalyst was activated in a fluid bed in dry air (water content less than 1 ppm) at 650°C for 8 hours. During the activation procedure nitrogen was used instead of air at temperatures lower than 320 °C.

Triethylboron (TEB) was used as the promoter.

Isobutane (2.84 kg/h), ethylene (1.26 kg/h), 1-hexene (4.5 g/h) and hydrogen (0.2 g/h) were continuously fed to the reactor at 101 °C. TEB was also continuously fed to the reactor in such an amount that concentration of boron in the isobutane was 0.08 ppm.

The catalyst feed to the reactor was controlled in order to maintain a constant ethylene concentration in the reactor of 9.0 mol%.

Polyethylene production was 1.1 kg/h.

The catalyst activity was 3050 g of polyethylene per g of catalyst.

After stabilization, the polymer powder was pelletized in a twinscrew extruder.

The polyethylene pellets had the following characteristics:

| | |
|---|---|
| - density: | 955.4 kg/$m^3$ |
| - strain hardening modulus: | 14.4 MPa |
| - high-load melt index: | 6.1 g/10 min |
| - Impact Izod (-30°C): | 30.1 KJ/m2 |
| - die swell 1600 $s^{-1}$ : | 3.00 |
| - $M_w/M_n$ : | 12.9 |

Example II

Ethylene and 1-hexene were copolymerised according to Example I.

Isobutane (2.84 kg/h), ethylene (1.26 kg/h), 1-hexene (5.0 g/h) and hydrogen (0.2 g/h) were continuously fed to the reactor at 100.2 °C. TEB was also continuously fed to the reactor in such an amount that concentration of boron in the isobutane was 0.07 ppm.

The catalyst feed to the reactor was controlled in order to maintain a constant ethylene concentration in the reactor of 8.2 mol%.

Polyethylene production was 1.1 kg/h.

The catalyst activity was 2900 g of polyethylene per g of catalyst.

After stabilization, the polymer powder was pelletized in a twinscrew extruder.

The polyethylene pellets had the following characteristics:

| | |
|---|---|
| - density: | 954.6 kg/$m^3$ |
| - strain hardening modulus: | 18.9 MPa |
| - high-load melt index: | 5.0 g/10 min |
| - Impact Izod (-30°C): | 34.2 KJ/m2 |
| - die swell 1600 $s^{-1}$ | 3.12 |
| - $M_w/M_n$ : | 11.8 |

Polyethylene obtained in the Examples I-II was compared with HDPE grades which are used in this market for production of open head drums:
• Lupolen 5261 Z of BASELL in Comparative Example A
• HDPE 56020 S of TOTAL Petrochemicals in Comparative Example B.

Table 1

|  | Example I | Example II | Comparative Example A | Comparative Example B |
|---|---|---|---|---|
| Physical form | Pellets | Pellets | Reactor powder | Reactor powder |
| Density (kg/m$^3$) | 955.4 | 954.6 | 954.0 | 952.0 |
| HLMI (g/10 min.) | 6.1 | 5.0 | 2.0 | 2.1 |
| Impact-30°C (kJ/m$^2$) | 30.1 | 34.2 | 50 | 60 |
| Mw/Mn | 12.9 | 11.8 | 16.4 | 12.0 |
| Strain hardening modulus (MPa) | 14.4 | 18.9 | 18 | 15 |

Pelletized HDPE according to Examples I-II has a higher density (higher stiffness and better stackability) and a much better processability (higher HLMI) in comparison with the reactor powders of Comparative Examples A and B.

The polymers according to the invention have an excellent impact/ESCR balance which is very advantageous for the use in the production of open head drums.

**Claims**

1. A pelletized ethylene polymer having:

   • a density $\geq$ 953 kg/m$^3$ and $\leq$ 957 kg/m$^3$ ( according to ISO1183)
   • a high-load melt index (HLMI) $\geq$ 3 g/10 min and $\leq$ 12 g/10 min (according to ISO 1133; 190°C,21.6 kg)
   • an Izod impact strength(-30°C) $\geq$ 25 KJ/m$^2$ and $\leq$ 70 KJ/m$^2$ (according to ISO 180/A) and
   • $M_w$ / $M_n$ $\geq$ 8 and $\leq$ 16 (according to size exclusion chromatography (SEC) measurement).

2. An ethylene polymer according to Claim 1 **characterised in that** the density is $\geq$ 954 kg/m$^3$.

3. An ethylene polymer according to any one of Claims 1-2 **characterised in that** the high-load melt index is $\geq$ 4 and is $\leq$ 10 g/10 min.

4. An ethylene polymer according to any one of Claims 1-3 **characterised in that** the Izod impact strength (-30°C) is $\geq$ 30 KJ/m$^2$

5. An ethylene polymer according to any one of Claims 1-4 **characterised in that** the strain hardening modulus $\geq$ 10 and $\leq$ 25 MPa (according to the method as described in Elsevier, Polymer 46(2005) 6369-6379).

6. A polymerization process for the preparation of an ethylene polymer according to any one of Claims 1-5 **characterised in that** the polymerization takes place by polymerising ethylene in the presence of a silica-supported chromium and fluor containing catalyst and in the presence of an alkyl containing promoter and wherein the silica-supported chromium catalyst does not comprise boron.

7. A polymerization process for the preparation of an ethylene polymer according to Claim 6 **characterised in that** the polymerization takes place by polymerising ethylene and at least one olefin comonomer having between three and ten carbon atoms per molecule.

8. A polymerisation according to Claim 7 **characterised in that** the comonomer is 1-hexene.

9. A polymerization process according to any one of Claims 6-8 **characterised in that** the alkyl containing promoter is an alkyl boron compound.

10. A polymerization process according to Claim 9 **characterised in that** alkyl containing promoter is triethyl boron.

11. A polymerisation according to any one of Claims 6-10 **characterised in that** the polymerisation takes place in a slurry loop reactor.

12. A polymerization according to any one of Claims 6-11 **characterised in that** the polymerization takes place by polymerising ethylene and 1-hexene in a slurry loop reactor in the presence of a silica-supported chromium and fluor containing catalyst and triethyl boron wherein the silica-supported chromium-containing catalyst is a silica-supported chromium catalyst having a pore volume smaller than 2.0 $cm^3$ /g and a specific surface area of at least 300 $m^2$/gram ,wherein the amount of chromium in the catalyst is at least 0.5 % by weight and the amount of fluor in the catalyst is at least 0.5 % by weight and wherein the boron concentration in the polymerization reactor is less than 0.25 ppm of boron based on the diluent.

13. An open head drum obtained with an ethylene polymer according to any one of Claims 1-5 or obtained with an ethylene polymer obtained with the process according to any one of Claims 6-12.

14. A jerry can obtained with an ethylene polymer according to any one of Claims 1-5 or obtained with an ethylene polymer obtained with the process according to any one of Claims 6-12.

**Patentansprüche**

1. Granuliertes Ethylenpolymer mit

   - einer Dichte $\geq$ 953 kg/$m^3$ und $\leq$ 957 kg/$m^3$ (gemäß ISO 1183),
   - einem Hochlast-Schmelzindex $\geq$ 3 g/10 min und $\leq$ 12 g/10 min (gemäß ISO 1133; 190°C; 21,6 kg),
   - einer Izod-Schlagzähigkeit (-30°C)) $\geq$ 25 kJ/$m^2$ und $\leq$ 70 kJ/$m^2$ (gemäß ISO 180/A) und
   - $M_w/M_n \geq$ 8 und $\leq$ 16 (gemäß Größenausschlusschromatographie(SEC)-Messung).

2. Ethylenpolymer nach Anspruch 1, **dadurch gekennzeichnet, dass** die Dichte $\geq$ 954 kg/$m^3$ ist.

3. Ethylenpolymer nach einem der Ansprüche 1-2, **dadurch gekennzeichnet, dass** der Hochlast-Schmelzindex $\geq$ 4 und $\leq$ 10 g/10 min ist.

4. Ethylenpolymer nach einem der Ansprüche 1-3, **dadurch gekennzeichnet, dass** die Izod-Schlagzähigkeit (-30°C)) $\geq$ 30 kJ/$m^2$ ist.

5. Ethylenpolymer nach einem der Ansprüche 1-4, **dadurch gekennzeichnet, dass** der Verfestigungsmodul $\geq$ 10 und $\leq$ 25 Mpa (gemäß der in Elsevier, Polymer 46 (2005) 6369-6379, beschriebenen Methode).

6. Polymerisationsverfahren zur Herstellung eines Ethylenpolymers nach einem der Ansprüche 1-5, **dadurch gekennzeichnet, dass** die Polymerisation durch Polymerisieren von Ethylen in Gegenwart eines siliciumdioxidgeträgerten Chrom und Fluor enthaltenden Katalysators und in Gegenwart eines alkylgruppenhaltigen Promotors erfolgt, wobei der siliciumdioxidgeträgerte Chromkatalysator kein Bor umfasst.

7. Polymerisationsverfahren zur Herstellung eines Ethylenpolymers nach Anspruch 6, **dadurch gekennzeichnet, dass** die Polymerisation durch Polymerisieren von Ethylen und mindestens einem Olefincomonomer mit zwischen drei und zehn Kohlenstoffatomen pro Molekül erfolgt.

8. Polymerisation nach Anspruch 7, **dadurch gekennzeichnet, dass** es sich bei dem Comonomer um 1-Hexen handelt.

9. Polymerisationsverfahren nach einem der Ansprüche 6-8, **dadurch gekennzeichnet, dass** es sich bei dem alkylgruppenhaltigen Promotor um eine Alkylborverbindung handelt.

10. Polymerisationsverfahren nach Anspruch 9, **dadurch gekennzeichnet, dass** es sich bei dem alkylgruppenhaltigen Promotor um Triethylbor handelt.

11. Polymerisation nach einem der Ansprüche 6-10, **dadurch gekennzeichnet, dass** die Polymerisation in einem Suspensionsschlaufenreaktor erfolgt.

12. Polymerisation nach einem der Ansprüche 6-11, **dadurch gekennzeichnet, dass** die Polymerisation durch Polymerisieren von Ethylen und 1-Hexen in einem Suspensionsschlaufenreaktor in Gegenwart von einem siliciumdioxidgeträgerten Chrom und Fluor enthaltenen Katalysator und Triethylbor erfolgt, wobei es sich bei dem siliciumdioxidgeträgerten chromhaltigen Katalysator um einen siliciumdioxidgeträgerten Chromkatalysator mit einem Porenvolumen von weniger als 2,0 cm$^3$/g und einer spezifischen Oberfläche von mindestens 300 m$^2$/Gramm handelt, wobei die Chrommenge in dem Katalysator mindestens 0,5 Gew.-% beträgt und die Fluormenge in dem Katalysator mindestens 0,5 Gew.-% beträgt und wobei die Borkonzentration weniger als 0,25 ppm, bezogen auf das Verdünnungsmittel, beträgt.

13. Deckelfass, erhalten mit einem Ethylenpolymer nach einem der Ansprüche 1-5, oder mit einem nach dem Verfahren nach einem der Ansprüche 6-12 erhaltenen Ethylenpolymer.

14. Kanister, erhalten mit einem Ethylenpolymer nach einem der Ansprüche 1-5, oder mit einem nach dem Verfahren nach einem der Ansprüche 6-12 erhaltenen Ethylenpolymer.

**Revendications**

1. Polymère d'éthylène aggloméré en granulés, ayant :

   • une densité $\geq$ 953 kg/m$^3$ et $\leq$ 957 kg/m$^3$ (selon ISO 1183)
   • un indice de fusion sous charge élevée (HLMI) $\geq$ 3 g/10 min et $\leq$ 12 g/10 min (selon ISO 1133 ; 190 °C, 21,6 kg)
   • une valeur de résistance au choc Izod (-30 °C) $\geq$ 25 KJ/m$^2$ et $\leq$ 70 KJ/m$^2$ (selon ISO 180/A) et
   • $M_w/M_n \geq$ 8 et $\leq$ 16 (mesuré par chromatographie d'exclusion de tailles (SEC)).

2. Polymère d'éthylène selon la revendication 1, **caractérisé en ce que** la densité est $\geq$ 954 kg/m$^3$.

3. Polymère d'éthylène selon l'une quelconque des revendications 1 ou 2, **caractérisé en ce que** l'indice de fusion sous charge élevée est $\geq$ 4 g/10 min et $\leq$ 10 g/10 min.

4. Polymère d'éthylène selon l'une quelconque des revendications 1 à 3, **caractérisé en ce que** la valeur de résistance au choc Izod (-30 °C) est $\geq$ 30 KJ/m$^2$.

5. Polymère d'éthylène selon l'une quelconque des revendications 1 à 4, **caractérisé en ce que** le module de déformation est $\geq$ 10 MPa et $\leq$ 25 MPa (selon la méthode décrite dans Elsevier, Polymer 46(2005) 6369-6379).

6. Procédé de polymérisation pour la préparation d'un polymère d'éthylène selon l'une quelconque des revendications 1 à 5, **caractérisé en ce que** la polymérisation est réalisée par polymérisation d'éthylène en présence d'un catalyseur contenant du chrome et du fluor sur un support en silice et en présence d'un promoteur contenant un alkyle et dans lequel le catalyseur contenant du chrome sur un support en silice ne contient pas de bore.

7. Procédé de polymérisation pour la préparation d'un polymère d'éthylène selon la revendication 6, **caractérisé en ce que** la polymérisation est réalisée par polymérisation d'éthylène et d'au moins un comonomère d'oléfine comportant entre 3 et 10 atomes de carbone par molécule.

8. Polymérisation selon la revendication 7, **caractérisée en ce que** le comonomère est le 1-hexène.

9. Procédé de polymérisation selon l'une quelconque des revendications 6 à 8, **caractérisé en ce que** le promoteur contenant un alkyle est un composé d'alkyle et de bore.

10. Procédé de polymérisation selon la revendication 9, **caractérisé en ce que** le promoteur contenant un alkyle est le triéthyl-bore.

11. Polymérisation selon l'une quelconque des revendications 6 à 10, **caractérisée en ce que** la polymérisation est réalisée dans un réacteur en boucle pour polymérisation en suspension.

12. Polymérisation selon l'une quelconque des revendications 6 à 11, **caractérisée en ce que** la polymérisation est réalisée par polymérisation d'éthylène et de 1-hexène dans un réacteur en boucle pour polymérisation en suspension en présence d'un catalyseur contenant du chrome et du fluor sur un support en silice et de triéthyl-bore, le catalyseur contenant du chrome sur un support en silice étant un catalyseur contenant du chrome sur un support en silice ayant un volume de pore inférieur à 2,0 cm$^3$/g et une surface spécifique d'au moins 300 m$^2$/gramme, la quantité de chrome dans le catalyseur étant d'au moins 0,5 % en poids et la quantité de fluor dans le catalyseur étant d'au moins 0,5 % en poids et la concentration de bore dans le réacteur de polymérisation étant inférieure à 0,25 ppm de bore relativement au diluant.

13. Fût à ouverture totale obtenu avec un polymère d'éthylène selon l'une quelconque des revendications 1 à 5 ou obtenu avec un polymère d'éthylène obtenu avec le procédé selon l'une quelconque des revendications 6 à 12.

14. Jerrican obtenu avec un polymère d'éthylène selon l'une quelconque des revendications 1 à 5 ou obtenu avec un polymère d'éthylène obtenu avec le procédé selon l'une quelconque des revendications 6 à 12.

## REFERENCES CITED IN THE DESCRIPTION

### Patent documents cited in the description

- EP 1204523 B
- WO 2005054315 A1
- US 6170691 B
- US 4182810 A
- EP 107127 A
- JP 2006182917 A

### Non-patent literature cited in the description

- **ANDREW PEACOCK.** Handbook of Polyethylene. Dekker, 2000, 43-66
- Polymer. Elsevier, 2005, vol. 46, 6369-6379
- **KURELEC.** Polymer. Elsevier, 2005, vol. 46, 6369-6379
- **ANDREW PEACOCK.** Handbook of Polyethylene, structure, properties and applications. Dekker, 2000, 242-244